Europäisches Patentamt

European Patent Office

Office européen des brevets

(19)

(11) Veröffentlichungsnummer: **0 136 567**

**A2**

(12) **EUROPÄISCHE PATENTANMELDUNG**

(21) Anmeldenummer: **84110418.5**

(22) Anmeldetag: **01.09.84**

(51) Int. Cl.⁴: **F 16 K 31/122**

(30) Priorität: **05.09.83 DE 3331977**

(43) Veröffentlichungstag der Anmeldung:
**10.04.85 Patentblatt 85/15**

(84) Benannte Vertragsstaaten:
**AT BE CH DE FR GB IT LI LU NL SE**

(71) Anmelder: **Max-Planck-Gesellschaft zur Förderung der Wissenschaften e.V.**
**Bunsenstrasse 10**
**D-3400 Göttingen(DE)**

(72) Erfinder: **Machoczek, Dieter**
**Kalvarienbergstrasse 35**
**D-7894 Stühlingen(DE)**

(74) Vertreter: **Magenbauer, Rudolf, Dipl.-Ing. et al,**
**Patentanwälte Dipl.-Ing. Rudolf Magenbauer Dipl.-Phys.**
**Dr. Otto Reimold Hölderlinweg 58**
**D-7300 Esslingen(DE)**

(54) Sitzventil zum Steuern des Durchflusses eines strömenden Mediums durch ein Rohrstück.

(57) Es handelt sich um ein Sitzventil (5) für ein Rohrstück (1), das innenseitig einen geneigt zur Rohrachse umlaufenden Ventilsitz besitzt, dem koaxial ein Rohranschlußstutzen (4) zum Anschließen des Sitzventils (5) gegenüberliegt. Dieses enthält einen Ventilstößel (6), dessen vorstehendes Ende einen in seiner Schließstellung am Ventilsitz (3) dicht anliegenden und in seiner Offenstellung dem Ventilsitz (3) mit Abstand gegenüberliegenden Ventilteller (7) trägt. Eine Steuerkammer im Ventilgehäuse (10, 11) ist einerseits von einem mit dem Ventilstößel (6) verbundenen und mit dem im Rohrstück enthaltenen Medium entgegen einer Rückholfederkraft beaufschlagbaren Steuerkolben (24) begrenzt. Andererseits mündet in die Ventilkammer eine Steueröffnung (14). Der Steuerkolben (24) ist in einem Zylinderteil (10) des Ventilgehäuses geführt. Die der Steueröffnung (14) zugewandte Kolbenseite ist in zwei Bereiche unterteilt, nämlich in einen in der Offenstellung mit der Steueröffnung (14) in offener Verbindung stehenden Anfahrbereich (28), der eine etwasgrößere Fläche als die wirksame Druckfläche des Ventiltellers (7) besitzt und bei dessen Beaufschlagung sich der Steuerkolben (24) entgegen der Kraft der Rückholfeder (26) vom Zylinderdeckel (13) abhebt, und in einen in der Offenstellung von der Steueröffnung (14) abgetrennten, nach dem Abheben des Steuerkolbens (24) vom Zylinderdeckel (13) ebenfalls beaufschlagten Zuschaltbereich (29).

./...

Fig. 1

- 1 -

Max-Planck-Gesellschaft zur Förderung

der Wissenschaften e.V., 34oo Göttingen

---

Sitzventil zum Steuern des Durchflusses

eines strömenden Mediums durch ein Rohrstück

---

Die Erfindung betrifft ein Sitzventil zum Steuern
des Durchflusses eines strömenden Mediums, insbesondere eine Flüssigkeit, durch ein Rohrstück,
an dessen Innenwand ein geneigt zur Rohrachse
umlaufender Ventilsitz angeordnet ist, dem
koaxial ein Rohranschlußstutzen zum Anschließen
des Sitzventils gegenüberliegt, das einen linear
hin und her beweglichen Ventilstößel, dessen aus
dem Ventilgehäuse vorstehendes und im angeschlossenen Zustand in den Rohranschlußstutzen
ragendes äußeres Ende einen in seiner Schließstellung am Ventilsitz dicht anliegenden und in seiner Offenstellung dem Ventilsitz mit Abstand gegenüberliegenden Ventilteller trägt, und eine Steuerkammer im Ventilgehäuse enthält, die einerseits von einer mit dem inneren Ende des Ventilstößels verbundenen, mit dem Medium entgegen der Kraft einer Rückholfeder beaufschlagbaren beweglichen Wand begrenzt ist und in die andererseits eine das Ventilgehäuse durchdringende Steueröffnung mündet.

Derartige Sitzventile werden häufig beispielsweise in Zusammenhang mit Wasser führenden Rohren irgendeiner Anlage, z.B. eine Wasseraufbereitungsanlage, verwendet und können in Verbindung mit geeigneten zusätzlichen Vorventilen gegebenenfalls auf automatische Weise nach einem gewünschten Programmablauf den Mediumdurchfluß stoppen oder freigeben. Dabei benutzt man als die bewegliche Wand beaufschlagendes Medium das in dem Rohr enthaltene Medium, dessen Druck beträchtlich sein kann. Wird der Zufluß des Mediums durch Umsteuern eines Vorventils zur Steuerkammer freigegeben, steht deshalb an der beweglichen Wand plötzlich ein großer Druck an.

Bei einem bekannten Sitzventil der eingangs genannten Art wird nun die bewegliche Wand von einer mit ihrem Umfang am Ventilgehäuse eingespannten Membran gebildet. Diese Membran wird, wie geschildert, sozusagen schlagartig durch die für das vollständige Schließen des Durchflußquerschnitts des Rohrstücks erforderlichen Schließkraft belastet, was schon nach verhältnismäßig kurzer Betriebsdauer zu Verschleißerscheinungen führt und ein Auswechseln der Membran erforderlich macht.
Auch hat die Praxis gezeigt, daß die auftretenden
Kraftstöße den Rohranschlußstutzen, der in der
Regel aus Kunststoff einstückig an das Rohrstück
angeformt ist, so stark belasten, daß er abreißen
kann, so daß ein zeit- und materialaufwendiger
Austausch des Rohrstücks notwendig wird. Dazuhin
strömt in einem solchen Störungsfall das im Rohr
befindliche Medium frei aus, was erhebliche Folgeschäden durch Überschwemmung mit sich bringt.

Der vorliegenden Erfindung liegt deshalb die Aufgabe zugrunde, ein solches Sitzventil zu schaffen,
das betriebssicher und ohne nennenswerten Verschleiß arbeitet.

Diese Aufgabe wird erfindungsgemäß dadurch gelöst,
daß die bewegliche Wand von einem Steuerkolben gebildet ist, der in einem an der Seite der im
Zylinderdeckel enthaltenen Steueröffnung die
Steuerkammer bildenden Zylinderteil des Ventilgehäuses geführt ist, und daß die der Steueröffnung
zugewandte Kolbenseite in zwei Bereiche unterteilt
ist, nämlich in einen in der Offenstellung mit der
Steueröffnung in offener Verbindung stehenden
Anfahrbereich, der eine etwas größere Fläche als
die wirksame Druckfläche des Ventiltellers besitzt
und bei dessen Beaufschlagung sich der Steuerkolben
entgegen der Kraft der Rückholfeder vom Zylinderdeckel abhebt, und in einen in der Offenstellung
von der Steueröffnung abgetrennten, nach dem Abheben des Steuerkolbens vom Zylinderdeckel ebenfalls beaufschlagten Zuschaltbereich.

Auf diese Weise ergibt sich durch geeignetes, an
die jeweiligen Erfordernisse angepaßtes Dimensionieren des Anfahrbereichs eine sanft anlaufende Schließbewegung , d.h. starke Kraftstöße werden vermieden. Die Materialbelastung einschließlich des Rohranschlußstutzens ist deshalb gering, wobei ein Kolben gegenüber einer sich dauernd in sich verformenden Membran ohnehin kein Verschleißteil ist. Das weich und schonend erfolgende Schließen und Öffnen besitzt dazuhin den Vorzug, daß der Anlagenbetrieb nahezu keinen Druckschwankungen unterworfen ist. Ferner kann sich die Lagerhaltung auf handelsübliche Dichtringe für den Steuerkolben beschränken, deren Austausch problemlos erfolgen kann. Demgegenüber ist die Lagerhaltung bei Verwendung des bekannten Sitzventils, will man im Störungsfall ein langes Stillsetzen der Anlage vermeiden, wesentlich aufwendiger (Rohrstücke, Membranen).

Ausführungsbeispiele der Erfindung sowie zweckmäßige Ausgestaltungen werden nun anhand der Zeichnung beschrieben. Es zeigen:

Fig. 1      ein erfindungsgemäßes Sitzventil in der Offenstellung im Längsschnitt,

Fig. 2      den Längsschnitt des Sitzventils gemäß Fig. 1 in Teildarstellung zu Beginn der Schließbewegung und

Fig. 3      die aus dem Ventilteller, dem Ventilstößel und dem Steuerkolben gebildete Einheit einer Ventilvariante in Seitenansicht.

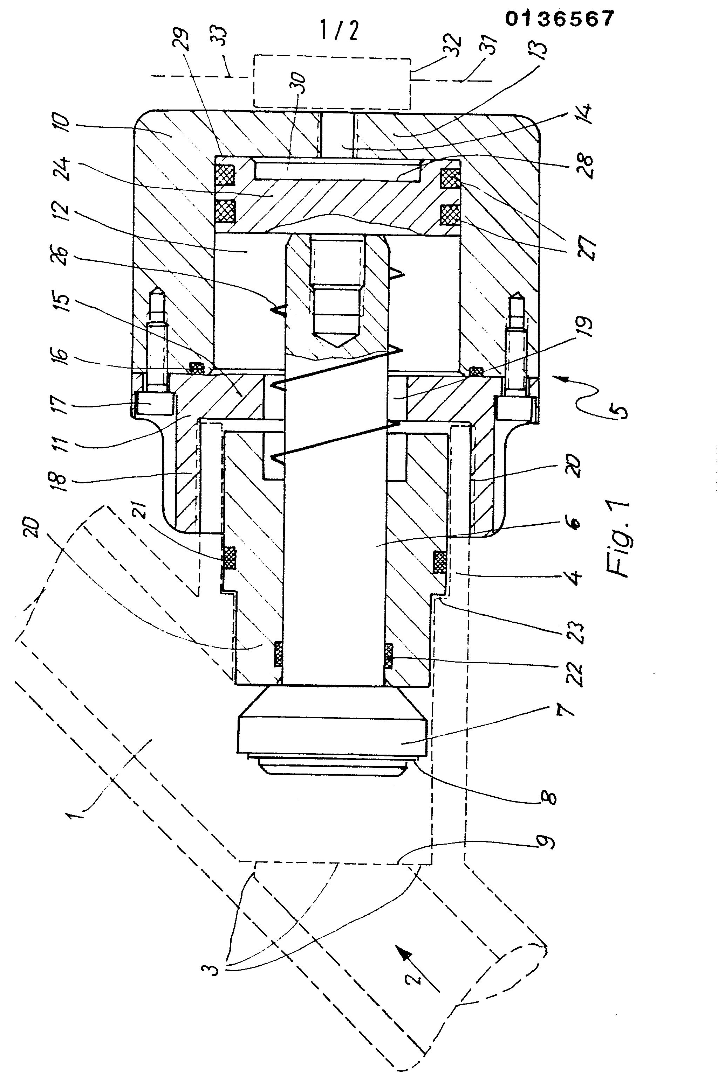

In Fig. 1 ist gestrichelt ein Rohrstück 1 gezeigt, das in einer Rohrleitung enthalten ist, das im Rahmen einer Gesamtanlage von einem Medium in Richtung gemäß Pfeil 2 durchströmt wird. Hierbei kann es sich um eine Flüssigkeit, z.B. Wasser,

- 5 -

0136567

jedoch auch um ein Gas handeln. An der Innenwand des Rohrstücks 1 ist ein geneigt zur Rohrachse
umlaufender Ventilsitz 3 angeordnet, der einstückig
an die Wandung des üblicherweise aus Kunststoff
bestehenden Rohrstücks in Gestalt eines Ringvorsprungs angeformt sein kann. Dem Ventilsitz 3
liegt koaxial ein Rohranschlußstutzen 4 gegenüber,
der nach Art einer spitzwinkeligen Verzweigung
ebenfalls einstückig an das Rohrstück 1 angesetzt
ist. Dieser Rohranschlußstutzen 4 dient zum Anschließen eines Sitzventils 5 oder Steuerkopfs, der
wie beim Ausführungsbeispiel auf das Anschlußstutzenende aufgeschraubt oder in dieses eingeschraubt
sein kann.

Mit Hilfe dieses Sitzventils 5 kann der Durchflußquerschnitt des Rohrstücks 1 verschlossen oder geöffnet werden. Hierzu besitzt es einen linear hin
und her beweglichen Ventilstößel 6, der an seinem
im angeschlossenen Zustand in den Rohranschlußstutzen ragenden äußeren Ende einen Ventilteller 7
mit einem stirnseitig angeordneten Ventildichtring
8 trägt. In der zurückgezogenen Offenstellung
(Fig. 1) liegt der Ventilteller 7 dem Ventilsitz 3
mit Abstand gegenüber, so daß der Durchflußquerschnitt des Rohrstücks 1 frei ist. Überführt man
den Ventilteller 7 auf noch zu beschreibende
Weise in seine Schließstellung, gelangt der
Ventildichtring 8 in dichte Anlage gegen die Dichtfläche 9 des Ventilsitzes 3, so daß der
Mediumdurchfluß gesperrt wird.

Das Sitzventil 5 besitzt dem Ventilteller 7 abgewandt ein Ventilgehäuse 1o,11, das beim Ausführungsbeispiel zweigeteilt ist und aus einem Zylinderteil
1o sowie aus einem Befestigungsteil 11 besteht.

- 6 -    0136567

Es umschließt eine zylindrische Bohrung 12, die in dem beim Ausführungsbeispiel topfähnlichen Zylinderteil 1o ausgebildet ist, dessen Boden 13 einen der beiden Zylinderdeckel darstellt, der zentral eine durchgehende Steueröffnung 14 enthält. Der entgegengesetzte Zylinderdeckel wird von einer radial nach innen hin vorstehenden Partie 15 des Befestigungsteils gebildet, das in axialer Richtung an über den Umfang verteilten Stellen mit dem Zylinderteil 1o unter Zwischenfügen eines Dichtrings 16 verschraubt ist. Die vom Befestigungsteil 11 her eingeführten Schrauben 17 sind mit ihren Köpfen in das Befestigungsteil versenkt, so daß sie in aggressiver Umgebung weniger schnell korrodieren. Eine dem Zylinderteil 1o abgewandte axiale Partie 18 des Befestigungsteils trägt ein Innengewinde 19, mit dem das Ventilgehäuse auf ein entsprechendes Außengewinde des Rohranschlußstutzens 4 aufgeschraubt ist. Wie schon angedeutet, könnte eine entsprechende axiale Partie des Befestigungsteils auch in den Rohranschlußstutzen eingreifen und hierbei ein Außengewinde aufweisen, das mit einem Innengewinde des Rohranschlußstutzens verschraubt ist.

Der Ventilstößel 6 steht aus dem Ventilgehäuse zum Ventilsitz 3 hin vor, indem er die radiale Partie 15 des Befestigungsteils 11 unter Bildung eines Ringspaltes 19 durchgreift. Im Anschluß hieran durchdringt der Ventilstößel 6 einen Lagerkörper 2o, der im angeschlossenen Zustand in den Rohranschlußstutzen 4 lose eingesetzt ist. Um das Innere des Rohrstücks 1 nach außen hin abzudichten, liegt der Lagerkörper 2o außen mit einem Dichtring 21 und innen mit einem Dichtring 22 am Ventilstößel 6 an. Die Einstecktiefe des Lagerkörpers 2o wird durch aneinander
anliegende Radialabsätze 23 des Lagerkörpers 2o
und des Rohranschlußstutzens 4 begrenzt.

Das dem Ventilteller 7 entgegengesetzte Ende
des Ventilstößels 6 ist mit einem Ventilkolben
24 starr verbunden, der in der zylindrischen
Bohrung 12 des Ventilgehäuses geführt ist. Durch
diesen Steuerkolben 24 wird die zylindrische
Bohrung 12 in zwei Räume unterteilt, wobei der an
der Seite des die Steueröffnung 14 enthaltenden
Zylinderdeckels 13 befindliche Raum eine Steuerkammer 25 bildet. Durch Druckbeaufschlagung des
Steuerkolbens von dieser Seite her verschiebt
sich der Kolben unter Vergrößerung der Steuerkammer 25 aus der Offenstellung in die Schließstellung des Ventils entgegen der Kraft einer
Rückholfeder 26, die sich beim Ausführungsbeispiel einenends an der anderen Kolbenseite und
andernends am Lagerkörper 2o abstützt. Bei
Druckentlastung der Steuerkammer 25 drückt diese
Rückholfeder 26 den Steuerkolben 24 und mit diesem
über den Ventilstößel 6 den Ventilteller 7 in die
dem Zylinderdeckel 13 zugewandte Offenstellung.
Die Rückholfeder 26 hält außerdem gleichzeitig den
Lagerkörper 2o in axialer Anlage gegen den Radialabsatz des Rohranschlußstücks 4. Die beiden vom
Steuerkolben 24 getrennten Räume der zylindrischen
Bohrung 12 sind mittels am Umfang des Steuerkolbens
24 eingesetzter Dichtringe 27 gegeneinander abgedichtet.

Des weiteren ist vorgesehen, daß die der Steueröffnung 24 zugewandte Kolbenseite in zwei Bereiche unterteilt ist, nämlich in einen in der Offenstellung mit der Steueröffnung 14 in offener
Verbindung stehenden Anfahrbereich 28 und in
einen Zuschaltbereich 29. Der Anfahrbereich 28
ist zentral kreisflächig angeordnet, und der
Zuschaltbereich 29 umschließt den Anfahrbereich
28 ringförmig. Dabei wird der Anfahrbereich 28 beim
Ausführungsbeispiel von der Bodenfläche einer
Kolbenausnehmung 3o in Gestalt einer zylindrischen
Sackausnehmung gebildet.

Der Zuschaltbereich 29 liegt in der Ventil-Offenstellung (Fig. 1) an der Zylinderstirnwand bzw.
dem Zylinderdeckel 13 an, so daß er von der Steueröffnung 14 abgetrennt ist bzw. nicht vom Steuer-
oder Druckmedium beaufschlagt werden kann. Der
Anfahrbereich 28 ist dagegen auch in der Offenstellung mit dem Medium beaufschlagbar, so daß bei
Mediumzufuhr eine dem Mediumdruck und der Fläche
des Anfahrbereichs entsprechende Anfahrkraft in
Richtung auf die Schließstellung hin entsteht.
Nach dem Abheben des Steuerkolbens 2 4 vom Zylinderdeckel 13 wird auch der Zuschaltbereich 29
beaufschlagt, so daß sich insgesamt ein sanftes
Anfahren und sodann ein Größerwerden der auf den
Kolben einwirkenden Mediumkraft ergibt.

Als Steuermedium verwendet man das im Rohrstück 1
bzw. im zugehörigen Rohr- oder Leitungssystem
enthaltene Medium. Da somit der beim Schließen
des Ventils am Steuerkolben 24 anstehende Mediumdruck gleich groß ist wie der ventiltellerseitig
herrschende Druck, muß der Anfahrbereich 28
des Kolbens eine etwas größere Fläche als die
wirksame Druckfläche des Ventiltellers 7 besitzen.

Dabei muß die Fläche des Anfahrbereichs 28 die wirksame Druckfläche des Ventiltellers um ein solches Maß übersteigen, daß bei Beaufschlagung des Anfahrbereichs 28 auch die Kraft der Rückholfeder 26 überwunden wird. Unter der wirksamen Druckfläche des Ventiltellers 7 ist die Differenz zwischen der dem Ventilsitz 3 zugewandten Vorderfläche, die in Richtung auf den Steuerkolben 24 hin mit Druck belastet ist, und der dem strömenden Medium ausgesetzten rückseitigen Fläche des Ventiltellers zu verstehen, die also in umgekehrter Richtung beaufschlagt ist.

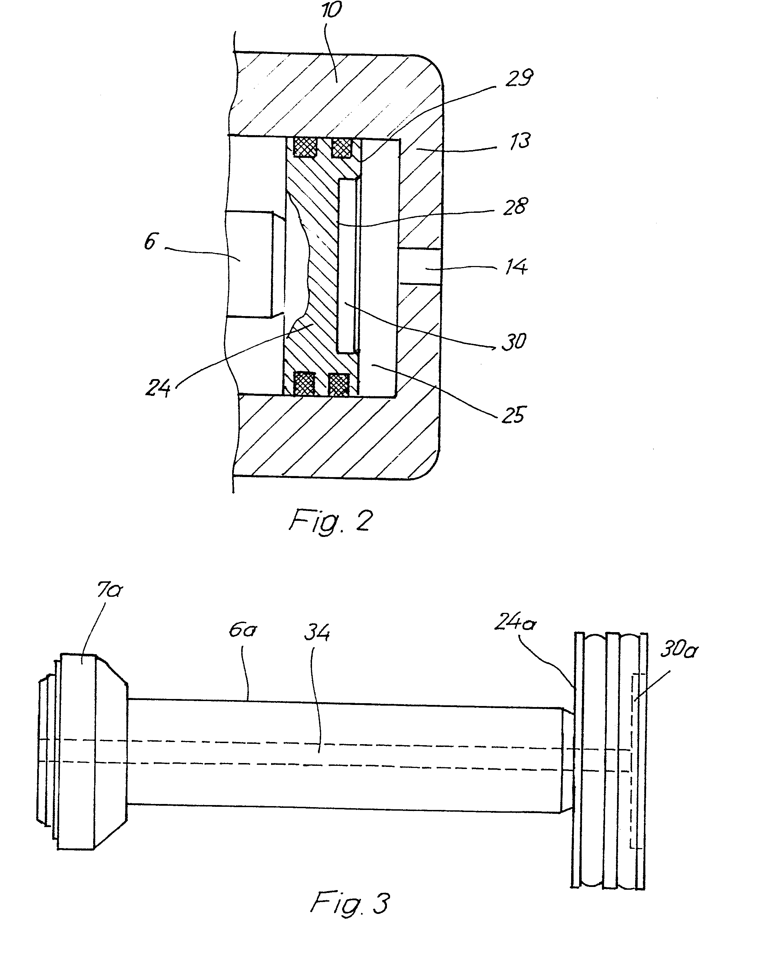

Beim Ausführungsbeispiel nach den Figuren 1 und 2 zweigt vom das Rohrstück 1 enthaltenden Rohr- oder Leitungssystem eine in der Zeichnung nur angedeutete Zufuhrleitung 31 ab, die zu einem ebenfalls nur angedeuteten Mehrwegeventil 32 führt, das am Ventilgehäuse befestigt sein kann und mit dessen Hilfe das Medium über die Steueröffnung 14 zum Schließen des Ventils in die Steuerkammer eingeleitet oder zum Öffnen des Ventils aus dieser abgeleitet werden kann, wozu vom Mehrwegeventil 32 eine Abflußleitung 33 abgeht. Das Betätigen des Mehrwegeventils 32 und gegebenenfalls eines weiteren, in die Zufuhrleitung 31 geschalteten Vorventils kann auf vorprogrammierte Weise erfolgen, wenn es sich um einen automatischen ablaufenden Anlagenbetrieb handelt.

Will man die Zufuhrleitung 31 einsparen, kann die Mediumzufuhr zur Steuerkammer 25 bzw. zur Kolbenausnehmung 30 auch über den Ventilteller, den Ventilstößel und den Steuerkolben erfolgen, wie Fig. 3 zeigt. In diesem Falle ist der Ventilteller 7a, der Ventilstößel 6a und der Steuerkolben 24a von einer durchgehenden Zufuhrbohrung 34 durchdrungen, die beiderseits frei ausmündet, kolbenseitig beim Ausführungsbeispiel in die Kolbenausnehmung 3oa. Zusätzlich ist das Mehrwegeventil 32 noch durch ein weniger aufwendiges Zweiwegeventil zu ersetzen, so daß sich bei gleicher Funktion eine einfachere und billigere Lösung ergibt. Bei diesem Ausführungsbeispiel erfolgt die Zufuhr des Steuermediums also nicht über die Steueröffnung 14, sondern über die Zufuhrbohrung 34. Solange das das Mehrwegeventil ersetzende Zweiwegeventil die Steuerbohrung 14 mit einer Abflußleitung verbindet, kann sich am Kolben kein Druck aufbauen, und das Ventil bleibt in seiner Offenstellung. Verschließt das Zweiwegeventil dagegen die genannte Steueröffnung im Zylinderdeckel, baut sich in der Kolbenausne-hmung 3oa der Druck auf, und die Schließbewegung wird eingeleitet. Kurz danach wird wie schon beschrieben auch in diesem Falle der Zuschaltbereich des Kolbens zugeschaltet.

Anstelle der Ausnehmung 3o am Kolben könnte man auch eine ebene Kolbenseite vorsehen, wenn man eine entsprechende Ausnehmung im Zylinderdeckel 13 anbringt, so daß die Mündung der Steueröffnung 14 auf die Größe des Anfahrbereichs erweitert ist. Das Anordnen der Ausnehmung am Kolben bringt jedoch die Vorteile mit sich, daß die Zylinderstirnwand bzw. der Zylinderdeckel 13 nicht geschwächt wird und daß man in das gleiche Ventilgehäuse an die jeweiligen Erfordernisse angepaßte Kolben mit unterschiedlich bemaßtem Anfahr- und Zuschaltbereich einsetzen kann.

Das Ventilgehäuse 1o, 11 kann man zweckmäßigerweise ebenso wie den Kolben 24 aus Kunststoff fertigen.

Auch die übrigen Teile des Sitzventils können aus Kunststoff bestehen, so daß sich eine Korrosionsbeständigkeit ergibt. Außerdem weisen solche Kunststoffe gute Gleiteigenschaften auf, was für die Kolbenführung von Bedeutung ist. Des weiteren ist die Kunststoffherstellung verhältnismäßig billig, wozu beiträgt, daß man die verschiedenen Ventilteile als Drehteile herstellen kann.

Die von dem Ventilteller 7, dem Ventilstößel 6 und dem Steuerkolben 24 gebildete Einheit wird durch die Anlage des Steuerkolbens an der Wandung der zylindrischen Bohrung 12 in axialer Richtung geführt. Hierdurch ergibt sich noch der zusätzliche Vorteil, daß man gegebenenfalls auch auf den Lagerkörper 2o verzichten kann, wozu man lediglich eine geeignete Abdichtung zwischen dem Befestigungsteil 11 einerseits und dem Rohranschlußstutzen 4 bzw. dem Ventilstößel 6 andererseits vorsehen muß.

Patentansprüche

1. Sitzventil zum Steuern des Durchflusses eines strömenden Mediums, insbesondere eine Flüssigkeit, durch ein Rohrstück, an dessen Innenwand ein geneigt zur Rohrachse umlaufender Ventilsitz angeordnet ist, dem koaxial ein Rohranschlußstutzen zum Anschließen des Sitzventils gegenüberliegt, das einen linear hin und her beweglichen Ventilstößel, dessen aus dem Ventilgehäuse vorstehendes und im angeschlossenen Zustand in den Rohranschlußstutzen ragendes äußeres Ende einen in seiner Schließstellung am Ventilsitz dicht anliegenden und in seiner Offenstellung dem Ventilsitz mit Abstand gegenüberliegenden Ventilteller trägt, und eine Steuerkammer im Ventilgehäuse enthält, die einerseits von einer mit dem inneren Ende des Ventilstößels verbundenen, mit dem Medium entgegen der Kraft einer Rückholfeder beaufschlagbaren beweglichen Wand begrenzt ist und in die andererseits eine das Ventilgehäuse durchdringende Steueröffnung mündet, dadurch gekennzeichnet, daß die bewegliche Wand von einem Steuerkolben (24) gebildet ist, der in einem an der Seite der im Zylinderdeckel (13) enthaltenen Steueröffnung (14) die Steuerkammer (25) bildenden Zylinderteil (1o) des Ventilgehäuses geführt ist, und daß die der Steueröffnung (14) zugewandte Kolbenseite in zwei Bereiche unterteilt ist, nämlich in einen in der Offenstellung mit der Steueröffnung (14) in offener Verbindung stehenden Anfahrbereich (28), der eine etwas größere Fläche

- 13 -

**0136567**

als die wirksame Druckfläche des Ventiltellers (7) besitzt und bei dessen Beaufschlagung sich der Steuerkolben (24)
entgegen der Kraft der Rückholfeder (26)
vom Zylinderdeckel (13) abhebt, und in einen
in der Offenstellung von der Steueröffnung
(14) abgetrennten, nach dem Abheben des Steuerkolbens (24) vom Zylinderdeckel (13) ebenfalls beaufschlagten Zuschaltbereich (29) .

2. Sitzventil nach Anspruch 1, dadurch gekennzeichnet, daß der Anfahrbereich (28) zentral
kreisflächig angeordnet ist und der Zuschaltbereich (29) den Anfahrbereich (28) ringförmig
umschließt.

3. Sitzventil nach Anspruch 1 oder 2, dadurch
gekennzeichnet, daß der Anfahrbereich (28)
von der Bodenfläche einer Kolbenausnehmung
(3o) gebildet wird.

4. Sitzventil nach Anspruch 1 oder 2, dadurch
gekennzeichnet, daß die Mündung der Steueröffnung auf die Größe des Anfahrbereichs
erweitert ist.

5. Sitzventil nach einem der Ansprüche 1 bis 4,
dadurch gekennzeichnet, daß der Ventilteller
(7a), der Ventilstößel (6a) und der Steuerkolben (24a) von einer durchgehenden Zufuhrbohrung (34) zur Mediumzufuhr zur Steuerkammer durchdrungen sind.

6. Sitzventil nach einem der Ansprüche 1 bis 5,
dadurch gekennzeichnet, daß das Ventilgehäuse
und der Kolben aus Kunststoff bestehen.

0136567

1/2

Fig. 1

Fig. 2

Fig. 3